# EUROPEAN PATENT APPLICATION

(11) **EP 4 431 162 A1**
(43) Date of publication of application: **18.09.2024**
(21) Application number: 23162655.7
(22) Date of filing: 17.03.2023
(51) Int. Cl.: A62B 17/00, A41D 31/08, B32B 5/02, B32B 5/06, B32B 7/028

(54) **QUILTED TEXTILE MATERIAL FOR PERSONAL PROTECTIVE CLOTHING**

(71) Applicant: Lenzing Aktiengesellschaft, 4860 Lenzing (AT)
(72) Inventor: Gstettner, Alexander, 4661 Roitham (AT)
(74) Representative: Global Patent Management Lenzing AG

(57) **Abstract**

The present invention relates to a flame-resistant quilted textile material suitable for flame resistant personal protective clothing containing or consisting of flame-resistant fibers, that is quilted with an upper quilting thread and a bobbin thread, wherein the bobbin thread is containing or consisting of a heat shrinking material. It further relates to the use of that material for the manufacture of a laminate, as well as to the laminate obtained by such use and to a flame resistant personal protective garment containing the flame-resistant quilted textile material.

## Description

This invention relates to a flame-resistant quilted textile material suitable for flame resistant personal protective clothing containing or consisting of flame-resistant fibers, that is quilted with an upper quilting thread and a bobbin thread, wherein the bobbin thread is containing or consisting of a heat shrinking material. It further relates to the use of that material for the manufacture of a laminate, as well as to the laminate obtained by such use and to a flame resistant personal protective garment containing the flame-resistant quilted textile material.

### Prior Art

To protect the life of a wearer from dangerous thermal threats protective clothing is used. Depending on the risk and level of exposure, this protective clothing is designed/constructed differently in order to achieve sufficient protection levels. The design/construction differences can be for instance the selected fiber material, fabric type, construction and garment layer assembly. All personal protective clothing (PPC) items are covered with strict PPC regulations and standards, for instance EN 469, NFPA 2112, NFPA 1971 or ISO 11999, EN ISO 11612. In these standards a wide range of performance requirements are defined, including thermal protection performance requirements.

It is common know-how that fire fighter protective clothing against electric arc flash, or garments for motor sport drivers are constructed in multi-layer assemblies. Each layer of the garment has a certain functionality and by putting these layers together in one garment best possible protection levels and comfort can be achieved.

Examples for such layer constructions e.g. for fire fighter garments can be found in a huge number of patents globally. E.g. the patents AU2001241491B2, AT506390B1 or US6983490B1 describe typical fire fighter multilayer assemblies consisting of
- Outer-shell,
- Moisture Barrier,
- Thermal Insulation,
- Lining fabric.

The moisture barrier is constructed in a way that a breathable membrane system is laminated on a carrier textile material, mostly a non-woven material consisting out of aramid fibers.

The thermal insulation layer, usually a non-woven needle punch or spun lace fabric, is usually quilted together with the innermost lining fabric.

Some garment makers also use extra thermal insulation layers in form of knitted or non-woven materials to achieve higher protection level against heat and flame and or electric arc flash. E.g. the FIA 8856-2000 standard for race-car drivers demands that all used layers in the garment have to be quilted together in special quilting pattern.

Heat stress is a fatal global danger: It is common knowledge that most of fire fighters do not die due to burn-injuries, but rather because of accidents related directly or indirectly to heat stress, i.e. heat stroke, heart attack, dehydration, fatigue, slip, trip and falls as well as cardio-vascular changes. Institutions like FEMA in US. report annually about the number and cause of fatalities of fire fighters (see e.g. https://www.usfa.fema.gov/statistics/reports/firefighters-departments/firefighter-fatalities.html).

All protective garments have in common that they have to be used in all possible environmental and weather conditions. No matter if it is freezing or hot in summer, fire fighters have to wear fire fighter turnout gear for structural firefighting, electrical engineers have to use protective clothing against electric arc flash and motor sport drivers have to wear race coveralls to be protected against fire blast. Heat Stress is the most critical factor and fatality reason number one in many countries not only, but especially in hot climate regions like for instance middle east, South of Europe, Africa, etc.. A number of studies from various institutes and organizations evaluated the topic how to reduce heat stress and ultimately save the life of the user.

Over the last 25 years national and international standardization have implemented a number of mandatory or optional testing methods and requirements to measure and prevent heat stress of protective clothing, using for instance the human skin model (ISO 11092), or sweating torso test methods (EN ISO 18640).

WO 2000/004798 A1 describes a multi-layer construction for personal protection clothing that shows good heat isolation as well as certain breathability and reduced water uptake at lower weight. The good heat isolation is obtained by incorporating air channels into the multi-layer construction by applying permanent ribs. However the whole construction is still relatively thick and stiff due to the permanent ribs. A garment containing this construction does not show sufficient flexibility, lightness and breathability as needed for good performance of technicians and fire-fighters

### Problem

Following key factors are important and constant research topic for entire textile industry, garment makers, end-users and associations:
- Best possible protection at lowest weight
- Best moisture management, most effective sweat transfer in vaporous and liquid stage
- High air permeability especially of lining fabrics
- Less moisture in the entire layer system
- Fast drying speed

In many garment concepts a higher weight and more textile substrate results in higher protection, but at the same time all other parameters like breathability, moisture management and air permeability drop down. To summarize, higher protection performance equals most of the time in less comfort and higher levels of heat stress.

Quilting technology is a very old technique (about 3400 BCE ) to connect/combine different materials by stitching/quilting together. Quilted textiles are mostly multiple layer materials combining a wadding with other woven and non-woven fabrics. Quilted fabrics are used for home textiles e.g. blankets, for sportswear garments, for sleeping bags or fashion, which has to protect against cold.

In Protective apparel applications, quilted liners are used to increase thermal insulation against heat. Usual quilted liners consisting out of a woven face cloth fabric quilted with one or more layers of non-wovens materials, in different quilting design pattern.

The goal of the new invention was to develop a new material which improves the important parameters listed in Table 1, offering even higher protection at lower weight, better breathability, comfort and water vapor transfer compared to the current state of the art materials. Due to the better performance, the risk of heat stress and heat stroke can be reduced.

### Description

It is an object of the present invention to provide a flame-resistant quilted textile material suitable for flame resistant personal protective clothing containing or consisting of flame-resistant fibers, that is quilted with an upper quilting thread and a bobbin thread, wherein the bobbin thread is containing or consisting of a heat shrinking material.

Preferred heat shrinking materials for this purpose are polyimide, meta-aramid, modacrylic (i.e. modified acrylic material made from acrylonitriles, but with larger amounts of other polymers added to make the copolymers) or PE-UHMW (polyethylene with ultrahigh molecular weight). Preferably the bobbin thread is consisting out of staple fiber or continuous multifilament yarns formed of these heat shrinking materials. Preferred specifications for the heat-shinking bobbin thread may be polyimide multifilament with 1000dtex, PE-UHMW multifilament with 1100dtex or modacrylic mulitfilament with 1000dtex. Such multifilaments are commercially available under the trade names "P84" for polyimide and "Dyneema" for PE-UHMW.

The upper thread may be constructed out of meta- or para-aramid, PES/cotton, cotton or other textile material, preferably meta- or para-aramid fiber.

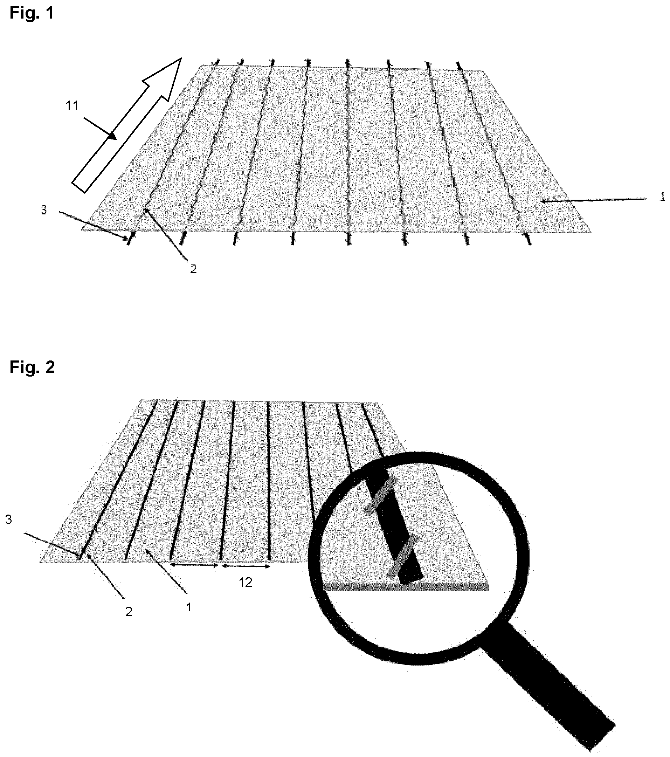

In the quilted textile material according to the invention the bobbin threads are preferably parallel, as usual for a quilted textile material. Surprisingly it was found that for the present invention the distance between the bobbin threads (i.e. the needle distance in width direction, visualized as distance 12 in Fig. 2) is important for the performance of the material, i.e. its shrinking behaviour and the heat insulation effect of the shrinked material. It was found that a distance 12 of between 7 and 10mm, preferably between 7 and 9mm resulted in the best performance in this regard.

In a preferred embodiment of the invention the textile material shows a heat shrinkage, compared to the formerly unexposed quilted textile material, of less than 10% when tested in a hot air circulating oven for 5 minutes exposure time at 260°C. For the purposes of the present invention "unexposed material" means the material according to the invention in the original state, that was not yet exposed to a thermal impact.

A textile material according to the invention may contain one or more layers of textile fabric. Each of these textile fabrics can independently be choosen out of the group containing woven fabrics, knitted fabrics and non-woven fabrics. The non-woven can be either spunlace, needlefelt thermal or chemical bonding structure. The knitted fabric can be circular, flat or warpknit construction.

For the purposes of the present invention flame-resistant fibers could generally be one or more out of the group containing meta-aramid, para-aramid, polyimide, polybenzimidazole (PBI), FR modacrylic, FR polyamide, lyocell FR and viscose FR fibers. Fibers are mostly understood as staple fibers of definite length, but also endless filaments of the same chemical nature may be used, in particular for woven or knitted fabrics according to the invention.

A layer of a textile fabric according to the invention may consist of or contain one or more fiber types out of the group consisting of meta-aramid, para-aramid, polyimide, polybenzimidazole (PBI), modacrylic, viscose FR and standard cellulosic fibers (cotton, viscose, modal, lyocell), as well as other FR fiber blends used for personal protective clothing. With regard to the present invention "FR" means "flame-resistant". Preferred are fiber blends of viscose FR and meta-aramid fibers and fiber blends of modacrylic and standard cellulosic fibers. Especially preferred are blends of 40 - 60% viscose FR and 60-40% meta-aramid and blends of 40-60% modacrylic and 60-40% standard cellulosic fibers. For specific applications the layers may contain between 0.1 and 5.0% para-aramid for enhanced tenacity and/or between 0.1 and 3.0% anti-static fibers in order to avoid static charges.

Another object of the present invention is the use of the flame-resistant quilted textile material as described above for the manufacture of a laminate, wherein the flame-resistant quilted textile material is laminated with a breathable membrane. The breathable membrane may be based on polyurethane, single-layer ePTFE (expanded PTFE), bicomponent ePTFE (i.e. a compound made of ePTFE and a polyurethane top coat), polyester, polyether, polyethylene or bicomponent expanded Polyethylene (ePE) (i.e. a compound made of ePE and a polyurethane top coat). The lamination technology can be state of the art hotmelt glue lamination, whereas the glue can be applied in point form with rotation screen on the membrane or on the textile substrate.

A further object of the present invention is a laminate containing a flame-resistant quilted textile material according to the invention as described above and a breathable membrane, manufactured by laminating the flame-resistant quilted textile material with the breathable membrane as also described above.

Still a further object of the present invention is a flame resistant personal protective garment containing a flame-resistant quilted textile material according to the invention and at least one other flame resistant woven, knit or non-woven layer material. In the garment according to the invention the flame-resistant quilted textile material may be used as innermost face cloth, intermediate liner or outer face fabric of a multi-layer fabric system.

### Description of the figures:

Fig. 1 shows an embodiment of the quilted textile material according to the invention, consisting of a primary textile layer 1 quilted with an upper thread 2 and bobbin thread 3, whereas the bobbin thread 3 is constructed out of a heat shrinking material. The orientation of the bobbin thread 3 is in parallel to the machine direction 11.
Fig. 2 shows the backside of the new quilted textile material. The heat shrinking bobbin thread runs straight in machine direction and is hold in place by the upper thread. The material is extremely flat and not much thicker, than the original thickness of the primary textile layer. Fig. 2 also shows the distance 12 between two parallel bobbin threads.
Fig. 3 shows that in case of thermal exposure 13 in the form of heat, flame, electric arc flash or even molten metal splash the heat shrinking bobbin thread starts to shrink. Because the heat shrinking bobbin thread is fixed with the upper thread on the primary textile layer it pulls the material together and forms air cushions. Fig 3 also shows in the lower part the shrinking effect 15 of the new quilted textile material after thermal exposure and the formation of air cushions 14, due to the shrinking effect of the heat shrinking bobbin thread.
Fig. 4 shows the backside view of a two-layer textile material according to the invention in unexposed state, with a quilted layer 4 and a non-quilted layer 5.
Fig. 5 shows the backside view of the two-layer textile material of Fig. 4 after thermal exposure.
Fig. 6 shows the backside view of a three-layer textile material according to the invention in unexposed state, with a quilted layer 4 and two non-quilted layers 5 and 6.
Fig. 7 shows a two-layer construction for a protective garment intended to protect against electric arc.
Fig. 8 shows a three-layer construction for a protective clothing for fire fighters.

As described, usually quilted liners are a combination of different textile layers. Under normal circumstances, it makes absolutely no sense at all, to quilt single layer materials. This is the main difference in sense of the purpose of the invention, because the quilting has a different purpose than connecting different fabric layers together. By quilting the upper and heat shrinking bobbin thread on a single layer fabric, the effect of air gap formation is made possible. Theoretically, there would also be other different ways to achieve a similar effect by weaving technology, but the connection of the heat shrinking thread with the fabric would be completely different and not so efficient, compared to the quilting technology. Furthermore, quilting is a very efficient and simple procedure, which can be applied on all kind of textile materials no matter if it is a woven, knit or nonwoven material.

Apart from the fact that the new quilted textile material can also be a single layer textile the surprisingly remarkable effect of this invention is the formation of air gaps due to the shrinkage effect of the shrinking bobbin thread.

In combination with other textile protective fabric layers the new quilted textile material gives higher protective insulation compared to conventional layer constructions with the same weight.

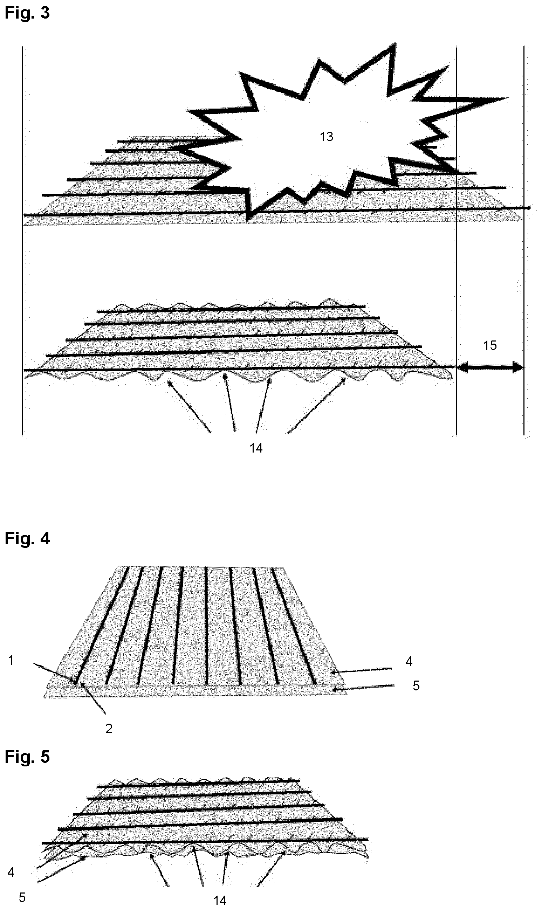

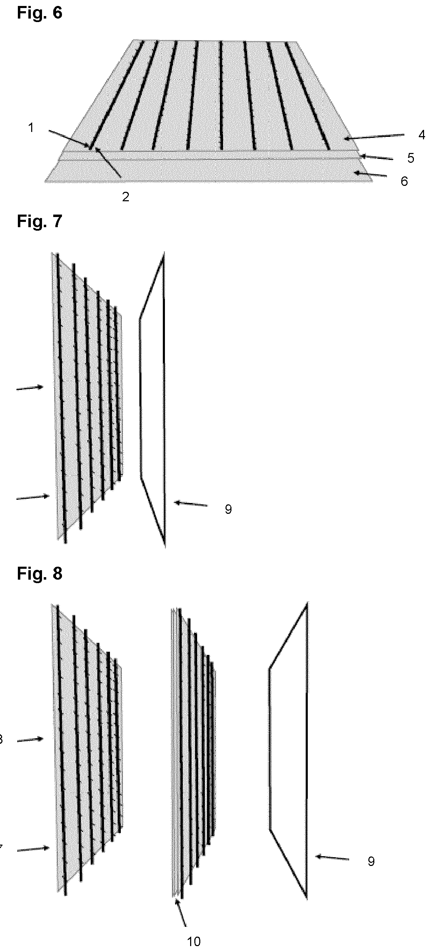

The substrate fabric of the new quilted textile material can be single or multiple layer like shown in Fig 4. In case of multiple layer construction, the thermal protection performance is even higher due to additional air cushion formation in-between the different textile layers 4 and 5 in Fig 5. The same applies for a three-layer construction like in Fig. 6 with the different textile layers 4, 5 and 6.

In a typical protective clothing for protection against electric arc according like in Fig. 7 a quilted fabric lining may be the inner fabric 7, with the side opposite to the shrinking bobbin thread side being the wearer skin side 8 and the outer fabric 9 on the other side of fabric 7.

In a typical protective clothing for fire fighters according like in Fig. 8 a quilted fabric lining may be the inner fabric 7, with the side opposite to the shrinking bobbin thread side being the wearer skin side 8. Between the inner fabric 7 and the outer fabric 9 an additional laminated quilted fabric 10 is placed, in order to provide for protection against liquids but also for breathability.

Even layer constructions with flammable fibers like standard cotton, viscose, modal, lyocell or polyester (PES) are possible as long as these layers are covered by other FR textile materials.

Advantages of the invention in comparison to the current state of the art are in particular:
- High personal protection effect at very low weight, appearing when extensive heat is applied.
- Excellent breathability, low RET due to thin layer construction in the unexposed state.
- Better comfort and less bulky compared to conventional quilted lining solutions.
- Most efficient moisture management, due to less moisture trapped in the system compared to conventional quilted liner solutions.
- Lower risk of steam burns due to reduced moisture take-up capability and hence, less moisture in the system.
- Fast drying, especially of the lining fabric, because there is no additional non-woven materials used in the innermost lining.
- Cost efficient, due to saving of material and extra insulation layers.

The invention will now be illustrated by examples. These examples are not limiting the scope of the invention in any way. The invention includes also any other embodiments which are based on the same inventive concept

### Examples

Electric arc testing is performed using open arc flash according to standard EN ISO 61482 1-1:2020:
- ATPV (Arc Thermal Performance Value) is the incident energy on a material that results in a 50% probability that sufficient heat transfer through the specimen is predicted to cause the onset of second-degree burn injury based on the Stoll Curve, in cal/cm².
- ELIM (Incident Energy Limit) is a numerical value of incident energy attributed to a product which value all product responses are below the Stoll curve and without breakopen, in cal/cm².

RET has been tested with the human skin model according to standard ISO 11092:2014.

Heat Transfer Radiation has been tested according to standard EN ISO 6942:2002, method B at a heat flux density of 40 kW/m².

Heat Transfer Flame has been tested according to standard EN ISO 9151:2016.

Heat Resistance/Shrinkage has been tested according to standard ISO 17493:2016 at a temperature of (260 ± 5) °C for an exposure time of 5 min.

### Example 1: Single layer liner for electric arc flash garment

A woven single layer face cloth fabric consisting of 50% viscose FR fiber (commercially available from Lenzing AG, Austria) and 50% meta-aramid fiber with 120g/m² fabric weight and 160cm width has been quilted with upper quilting thread in 100% meta-aramid (manufacturer: company Coats, article "Fire Fly") and a bobbin thread made out of polyimide multifilament MF 2,2/1060 dtex 80 TmZ Type 70 (commercially available as "P84" from Evonik, Austria).

The quilting pattern was a very efficient and fast quilting design running straight in machine direction with a needle distance in width direction of 8 mm. The new quilted single layer liner was assembled with another fabric containing 50% viscose FR fiber and 50% meta-aramid fiber with 130g/m² fabric weight and 160cm width (see Fig 7). The total weight of the double layer assembly was only 260g/m².

This compound has been subjected to electric arc testing using open arc flash according to EN ISO 61482 1-1. A number of 7 electric arc shots each on 3 panels have been performed and surprising results obtained.

Table 1 shows the results of
- Assembly 1.1 comprising the new quilted liner (130g/m²) according to the invention in combination with an outer 130g/m² woven fabric containing 50% viscose FR fiber and 50% meta-aramid fiber, total weight 260 g/m², in comparison with
- Assembly 1.2: Double layer of 2 x 130g/m² woven fabric containing 50% viscose FR fiber and 50% meta-aramid fiber, with a total weight of 260 g/m², and
- Assembly 1.3: Conventional single layer 260g/m² woven fabric in the same blend 50% viscose FR fiber and 50% meta-aramid fiber.

**Table 1:**

| Test Parameter | Assembly 1.1 | Assembly 1.2 | Assembly 1.3 |
|---|---|---|---|
| ATPV [cal/cm²] | 21 | 17 | 15 |
| ELIM [cal/cm²] | 19 | 16 | 13 |

Though all 3 material assemblies have the same weight and base fiber construction, the results of assembly 1.1 are significantly better.

### Example 2: Quilted double layer construction consisting of two layers:

Layer 1: 80 g/m² 3D non-woven material in a blend of 50% viscose FR fiber and 50% meta-aramid fiber and
Layer 2: 50 g/m² flat spunlace material consisting of 100% meta-aramid fibers.

Both layers are quilted together with upper quilting thread in 100% meta-aramid (manufacturer: company Coats, article "Fire Fly") and a bobbin thread made out of polyimide multifilament MF 2,2/1060 dtex 80 TmZ Typ 70 (commercially available as "P84" from Evonik, Austria). The quilting pattern was a very efficient and fast quilting design running straight in machine direction with a needle distance in width direction of 8mm.

The layer orientation was in a way that the bobbin thread was visible on the 50 g/m² flat Aramid spunlace side.

After quilting the resulting liner material was laminated with an ePTFE bicomponent membrane using conventional polyurethane hot melt gluepoint lamination. The membrane was laminated on the 80 g/m² 3D non-woven side. The resulting laminate had a final weight of 185 g/m². This new laminate was assembled as follows:
Assembly 2.1:
   - Outer-shell material made out of 100% meta-aramid fibers, fabric weight 195 g/m²,
   - Laminate with ePTFE membrane as described above, weight 185 g/m²,
   - Lining fabric according to the invention as described in Example 1 50/50 viscose FR/meta-aramid single layer with quilting, weight 130 g/m²,
   - Total weight of the assembly 510 g/m².
Assembly 2.2 consisted of the same compound materials as Assembly 2.1, but without the quilting according to the invention.

Both assemblies have been tested according to the testing methods as indicated in the table, with the technical results shown in Table 2.

**Table 2:**

| Test Method | Assembly 2.1 | Assembly 2.2 |
|---|---|---|
| RET m²Pa/W | 11,7 | 11,5 |
| HTI 24 Seconds | 21,4 | 18,3 |
| RHTI 24 Seconds | 19,0 | 16,4 |
| Heat Shrinkage % | 5 | 5 |

Both components had the same level of breathability and also heat shrinkage was the same, but the difference in thermal protection was surprisingly huge between assembly 2.1 with quilting according to the invention and assembly 2.2 without quilting.

The optical effect of air cushion formation was clearly visible on the laminate of assembly 2.1.

In summary the unexposed material of the new invention shows the same comfort than without quilting effect, but the thermal insulation after thermal exposure is significantly higher.

The assembly 2.2 without the quilting did even fail the standard requirements for radiant heat protection by 1,6 seconds, according to EN 469 Fire Fighter Standard, which has to be minimum 18 seconds RHTI 24. The assembly 2.1 with the new quilting exceeded the standard requirement for radiant heat protection of 18 seconds by 1 second.

All tests have been performed in new state conditions as received, which are perceived as the stricter test set up, in comparison to materials pretreated by washing.

## Claims

1. A flame-resistant quilted textile material suitable for flame resistant personal protective clothing containing or consisting of flame-resistant fibers, that is quilted with an upper quilting thread and a bobbin thread, **characterized in that** the bobbin thread is containing or consisting of a heat shrinking material.

2. Textile material according to claim 1, whereas the heat shrinkage of the formerly unexposed quilted textile material is <10% when tested in a hot air circulating oven for 5 minutes exposure time and 260°C.

3. Textile material according to claim 1, wherein the bobbin thread is consisting out of staple fiber or continuous multifilament yarns.

4. Textile material according to claim 1, wherein the textile material contains one or more layers of textile fabric.

5. Textile material according to claim 4, wherein a layer of textile fabric consists of or contains one or more fiber types out of the group consist of meta-aramid, polyimide, polybenzimidazole, modacrylic, viscose FR and standard cellulosic fibers (cotton, viscose, modal, lyocell).

6. Use of the flame-resistant quilted textile material of claim 1 for the manufacture of a laminate, wherein the flame-resistant quilted textile material is laminated with a breathable membrane.

7. Laminate containing a flame-resistant quilted textile material and a breathable membrane, manufactured according to claim 6.

8. Flame resistant personal protective garment containing a flame-resistant quilted textile material according to claim 1 and at least one other flame resistant woven, knit or non-woven layer material.
